# EUROPEAN PATENT SPECIFICATION

(11) **EP 1 048 832 B1**
(45) Date of publication and mention of the grant of the patent: **13.10.2004**
(21) Application number: 00108568.7
(22) Date of filing: 19.04.2000
(51) Int. Cl.: F02B 29/04, F01P 1/06

(54) **"Supercharged internal-combustion engine"**
Aufgeladene Brennkraftmaschine
Moteur à combustion interne suralimenté

(30) Priority: 27.04.1999 IT TO990342
(43) Date of publication of application: 02.11.2000
(73) Proprietor: IVECO S.p.A., 10156 Torino (IT)
(72) Inventor: Gori, Fabio, c/o Universita' di Roma Torvergata, Via di Torvergata 110, 00133 Roma (IT); Pippione, Eugenio, 10141 Torino (IT); Scavarda, Gianfranco, 10080 Lusiglie' (IT)
(74) Representative: Passini, Angelo

(56) References cited:
- US-A- 4 075 991
- US-A- 4 226 217
- US-A- 4 236 492
- US-A- 4 610 326
- US-A- 5 492 167
- PATENT ABSTRACTS OF JAPAN vol. 010, no. 360 (M-541), 3 December 1986 (1986-12-03) & JP 61 157721 A (FUJI HEAVY IND LTD), 17 July 1986 (1986-07-17)
- PATENT ABSTRACTS OF JAPAN vol. 018, no. 389 (M-1642), 21 July 1994 (1994-07-21) & JP 06 108866 A (MAZDA MOTOR CORP), 19 April 1994 (1994-04-19)

## Description

The present invention relates to an internal-combustion engine supercharged by means of a turbocharger.

It is known that supercharged engines are generally provided with an intercooler disposed in the supercharging duct and adapted to cool the air leaving the turbocharger unit before being it is admitted into the intake manifold. The intercooler comprises an air-air heat exchanger which is disposed in front of the main radiator of the vehicle and through which the flow of air produced by the fan associated with said radiator passes.

Although the use of intercoolers of the type described is widespread and generally satisfactory, there is now a requirement in this sector to improve further the cooling of the supercharging air.

JP-61157721 discloses a supercharged internal-combustion engine having the features of the preamble of claim 1. According to this disclosure, an air intake cooling device for a supercharged engine includes a fan facing an intercooler of the engine supercharging system and driven by the supercharger shaft; both the fan and the whole supercharger are encapsulated in a ducting having an inlet facing the intercooler. The intake air cooling device thus results to be complex and costly.

It is the object of the present invention to devise an internal-combustion engine which makes it possible to solve the prior art problems in a simple, effective and economic manner.

Said object is achieved by a supercharged internal-combustion engine according to claim 1.

According to a preferred embodiment of the present invention, the supercharging duct has an inner finned section and/or an outer finned section level with the portion facing the forced-ventilation ducting.

With a view to a better understanding of the present invention a preferred embodiment will be described non-restrictively by way of example below and with reference to the accompanying drawings, in which:
- Figure 1 illustrates schematically an internal-combustion engine of a commercial vehicle according to the present invention; .
- Figure 2 is an exploded schematic view in perspective of a forced-ventilation device associated with a supercharging duct of the engine in Figure 1, and
- Figure 3 is a schematic section illustrating a detail of the device in Figure 2.

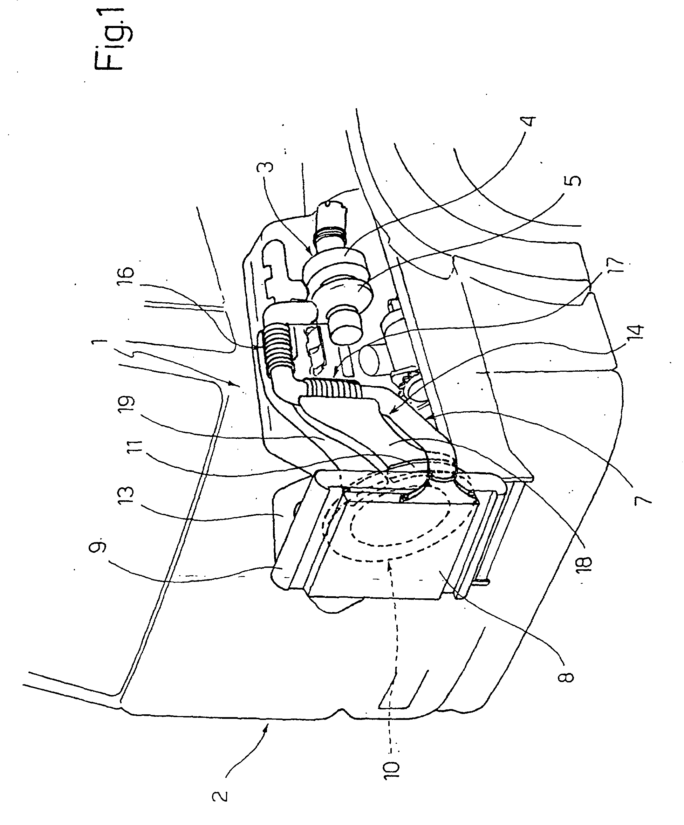

Referring to Figure 1, the reference numeral 1 generally denotes a supercharged diesel engine of a commercial vehicle 2 (illustrated partially and schematically).

The engine 1 is provided with a supercharging turbocharger 3 which, in turn, comprises a turbine 4 actuated by the exhaust gas of the engine 1 and a compressor 5 driven by the turbine 4 and connected on the output side to a supercharging duct 7. The duct 7 is connected to an intercooler 8 comprising an air-air heat exchanger which is mounted in front of a main radiator 9 of the engine 1 and through which passes the flow of air produced by a fan 10 arranged facing the main radiator, downstream thereof, and in front of the engine 1. The fan 10 is advantageously provided with an annular cowling 11 and with a blade-type impeller 12.

The intercooler 8 is connected on the output side to an intake manifold (not shown) of the engine 1 by means of a duct 13.

According to the present invention, a device 14 for the forced-ventilation of the supercharging duct 7 is used for the purpose of cooling the duct itself and for further reducing the temperature of the supercharging air, thereby improving the efficiency of the engine 1.

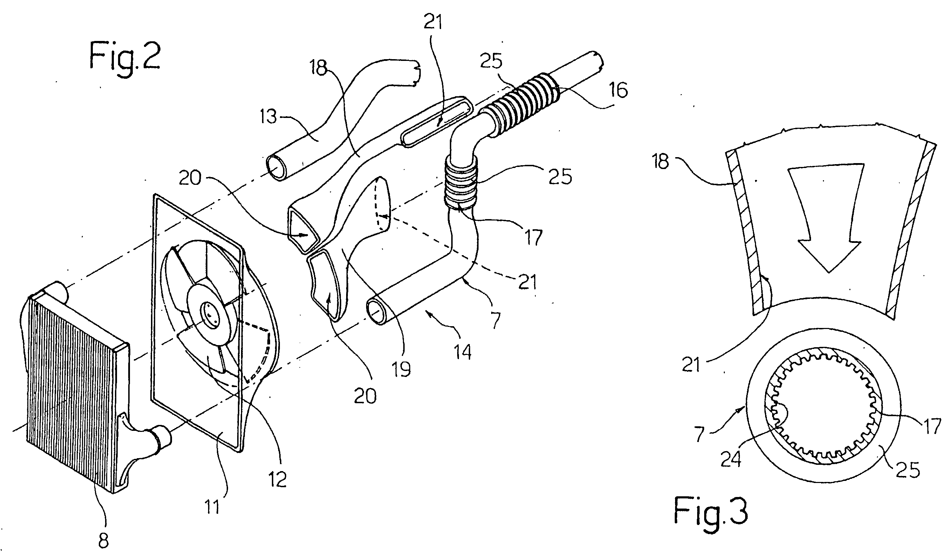

The device 14 essentially comprises a pair of ductings 18,19 adapted to intercept part of the flow of air produced by the fan 10 and to convey it to the supercharging duct 7. In particular (Figure 2), the duct 7 comprises a portion 16 extending in a longitudinal direction with respect to the vehicle 2, and a portion 17 extending in a vertical direction. The respective ductings 18,19 are associated with said portions 16,17 of the duct 7 and each have an inlet aperture 20 facing the fan 10 and of substantially in the shape of an annular ring sector so as to intercept part of the air flow generated by the fan 10, and an outlet aperture 21 of elongate section in a direction parallel to the axis of the respective portion 16,17 of the duct 7. The outlet aperture 21 is advantageously of comparable width to the diameter of the duct 7, for example between 0.25 and 1.5 times said diameter, and of a length equal to several times the diameter of the duct 7 (for example equal to at least 3 times said diameter) .

Advantageously, the portions 16 and 17 each have an inner finned section 24 (Figure 3) and an outer finned section 25 for the purpose of assisting the heat exchange between the supercharging air and the air flow produced by the fan 10.

In operation the temperature of the air at the outlet from the fan 10 is of the order of magnitude of 70°C as a result of the heating which has taken place in passing through the intercooler 8 and the main radiator 9; however, this temperature makes it possible to provide an efficient cooling action of the duct 7 which is at a much higher temperature, for example of the order of 185°C. By using the ductings 18,19 to cool the duct 7 there have been achieved reductions in the temperature of the air admitted into the intake manifold of the engine 1 of the order of magnitude of 15°C.

Finally, it is evident that the engine 1 and, in particular, the forced-ventilation device 14, can be subject to modifications and variations without departing from the scope of protection defined by the claims. In particular, the supercharging duct 7 may be of any geometry and, therefore, the number, form and arrangement of the ductings 18,19 associated therewith may be different.

## Claims

1. A supercharged internal-combustion engine (1) comprising a turbocharger (3), a supercharging duct (7) connecting an outlet of the turbocharger (3) to an intake manifold of the engine (1), an intercooler (8) in series with said supercharging duct (7) for cooling the supercharging air of the engine (1), and forced-ventilation means (14) for cooling at least one portion of said supercharging duct (7), said intercooler (8) comprising a heat exchanger facing a fan (10) associated with a radiator (9) for cooling said engine (1), **characterised in that** said forced-ventilation means (14) comprise a plurality of ductings (18,19) having an inlet aperture (20) facing said fan (10) and an outlet aperture (21) facing respective portions (16,17) of the supercharging duct (7).

2. An engine according to claim 1, **characterised in that** said inlet aperture (20) is in the shape of an annular ring sector.

3. An engine according to claim 1 or 2, **characterised in that** said outlet aperture (21) is of elongate section in a direction parallel to said portion (16;17) of said supercharging duct (7).

4. An engine according to claim 4, **characterised in that** said section of said outlet aperture (21) is of a width between 0.25 and 1.5 times the diameter of said supercharging duct (7).

5. An engine according to claims 3 or 4, **characterised in that** said section of said outlet aperture (21) is of a length equal to at least 3 times the diameter of said supercharging duct (7).

6. An engine according to any of the preceding claims, **characterised in that** said supercharging duct (7) has an outer finned section (25) at least along said portion (16,17).

7. An engine according to any one of the preceding claims, **characterised in that** said supercharging duct (7) has an inner finned section (24) at least along said portion. (16,17).

## Patentansprüche

1. Aufgeladener Verbrennungsmotor (1), umfassend einen Turbolader (3), eine Ladeleitung (7), die einen Auslass des Turboladers (3) mit einem Einlasskrümmer des Motors (1) verbindet, einen Intercooler (8) in Reihe mit der Ladeleitung (7) zum Kühlen der Ladeluft des Motors (1), und eine Zwangsbelüftungseinrichtung (14) zum Kühlen zumindest eines Abschnitts der Ladeleitung (7), wobei der Intercooler (8) einen Wärmetauscher aufweist, der einem Lüfter (10) zugewandt ist, welcher mit einem Radiator (9) zum Kühlen des Motors (1) verknüpft ist,
**dadurch gekennzeichnet, dass** die Zwangsbelüftungseinrichtung (14) eine Mehrzahl von Leitungen (18, 19) aufweist, welche eine dem Lüfter (10) zugewandte Einlassöffnung (20) und eine jeweiligen Abschnitten (16, 17) der Ladeleitung (7) zugewandte Auslassöffnung (21) besitzt.

2. Motor nach Anspruch 1, **dadurch gekennzeichnet, dass** die Einlassöffnung (20) in der Form eines Ringsektors ist.

3. Motor nach Anspruch 2 oder 2, **dadurch gekennzeichnet, dass** die Auslassöffnung (21) ein länglicher Querschnitt in einer Richtung parallel zu dem Abschnitt (16; 17) der Ladeleitung (7) ist.

4. Motor nach Anspruch 4, **dadurch gekennzeichnet, dass** der Querschnitt der Auslassöffnung (21) eine Breite zwischen dem 0.25-fachen und dem 1,5-fachen des Durchmessers der Ladeleitung (7) besitzt.

5. Motor nach Anspruch 3 oder 4, **dadurch gekennzeichnet, dass** der Querschnitt der Auslassöffnung (21) eine Länge gleich zumindest dem dreifachen des Durchmessers der Ladeleitung (7) besitzt.

6. Motor nach einem der vorhergehenden Ansprüche, **dadurch gekennzeichnet, dass** die Ladeleitung (7) einen äußeren, gerippten Querschnitt (25) zumindest entlang des Abschnitts (16, 17) besitzt.

7. Motor nach einem der vorhergehenden Ansprüche, **dadurch gekennzeichnet, dass** die Ladeleitung (7) einen inneren, gerippten Abschnitt (24) zumindest entlang des Abschnitts (16, 17) besitzt.

## Revendications

1. Moteur à combustion interne sur-alimenté (1) comprenant un turbo compresseur (3), un conduit de sur-alimentation (7) reliant une sortie du turbocompresseur (3) à un collecteur d'admission du moteur (1), un refroidisseur intermédiaire (8) en série avec ledit conduit de sur-alimentation (7) pour refroidir l'air de sur-alimentation du moteur (1), et un moyen de ventilation forcée (14) pour refroidir au moins une portion dudit conduit de sur-alimentation (7), ledit refroidisseur intermédiaire (8) comprenant un échangeur de chaleur orienté vers un ventilateur (10) associé à un radiateur (9) pour refroidir ledit moteur (1), **caractérisé en ce que** ledit moyen de ventilation forcée (14) comprend une pluralité de conduits (18,19) ayant une ouverture d'entrée (20) orientée vers ledit ventilateur (10) et une ouverture de sortie (21) orientée vers des portions respectives (16,17) du conduit de sur-alimentation (7).

2. Moteur selon la revendication 1, **caractérisé en ce que** ladite ouverture d'entrée (20) se présente sous la forme d'un secteur de bague annulaire.

3. Moteur selon la revendication 1 ou 2, **caractérisé en ce que** ladite ouverture de sortie (21) présente une section oblongue dans une direction parallèle à ladite portion (16,17) dudit conduit de sur-alimentation.

4. Moteur selon la revendication 4, **caractérisé en ce que** ladite section de ladite ouverture de sortie (21) présente une largeur entre 0,25 et 1,5 fois le diamètre dudit conduit de sur-alimentation (7).

5. Moteur selon la revendication 3 ou 4, **caractérisé en ce que** ladite section de ladite ouverture de sortie (21) est d'une longueur égale à au moins 3 fois le diamètre du conduit de sur-alimentation (7).

6. Moteur selon l'une des revendications précédentes **caractérisé en ce que** ledit conduit de sur-alimentation (7) présente une section extérieure (25) à ailettes au moins le long de ladite portion (16,17).

7. Moteur selon l'une des revendications précédentes, **caractérisé en ce que** ledit conduit de sur-alimentation (7) présente une section intérieure (24) à ailettes au moins le long de ladite portion (16,17).
